# EUROPEAN PATENT SPECIFICATION

(11) **EP 3 947 822 B1**
(45) Date of publication and mention of the grant of the patent: **14.06.2023**
(21) Application number: 20718144.7
(22) Date of filing: 27.03.2020
(51) Int. Cl.: E02B 17/00, E21B 17/00, B08B 9/023, B23D 57/00

(54) **A DEVICE FOR MOVING ALONG A CYLINDRICAL STRUCTURE AND ITS USE, AND A METHOD FOR WORKING A CYLINDRICAL STRUCTURE**
VORRICHTUNG ZUM BEWEGEN ENTLANG EINER ZYLINDRISCHEN STRUKTUR UND IHRE VERWENDUNG SOWIE VERFAHREN ZUM BEARBEITEN EINER ZYLINDRISCHEN STRUKTUR
DISPOSITIF DE DÉPLACEMENT LE LONG D'UNE STRUCTURE CYLINDRIQUE ET SON UTILISATION, AINSI QUE PROCÉDÉ DE TRAVAIL D'UNE STRUCTURE CYLINDRIQUE

(30) Priority: 28.03.2019 DK PA201970192
(43) Date of publication of application: 09.02.2022
(73) Proprietor: SubC Partner A/S, 6700 Esbjerg (DK)
(72) Inventor: BUCH-HANSEN, Steen, 6700 Esbjerg (DK); KLEIN, Tonny, 6715 Esbjerg (DK); LINDQUIST, Bjarne, 6710 Esbjerg (DK); NIELSEN, Frederik, 6700 Esbjerg (DK); NYGAARD, Leo, 6700 Esbjerg (DK)
(74) Representative: Patrade A/S
(86) International application number: PCT/DK2020/050080
(87) International publication number: WO 2020/192856

(56) References cited:
- CN-A- 105 903 726
- CN-A- 108 436 597
- FR-A1- 3 006 208

## Description

### FIELD OF THE INVENTION

The present invention relates to a crawler for moving along the external surface of a cylindrical structure, for example pipe-like structures of a support jacket of an offshore installation, as defined by claim 1. The invention also relates to a method for working the cylindrical structure, as defined by claim 20. Preferred embodiments of the invention are defined by the dependent claims.

### BACKGROUND OF THE INVENTION

A remotely-operable machines that are capable of moving along and adhering to pipes or other elongate cylindrical structures in offshore industry are typically called crawlers, of which various types exist for cleaning and inspection of such structures, for example pipe structures. For inspecting and working cylindrical structures in offshore constructions, including steel frames that made up of pipe structures for carrying off shore platforms, also called support jackets, high demands on reliability and robustness of crawlers are required. This is especially so in the subsea and in the surface water zone, also called splash zone, where waves and currents are unpredictable and put stress on the equipment. There is therefore a high demand for useful crawlers that are versatile and robust.

Relevant prior art is disclosed in documents CN108436597 A, CN105903726 A, and FR3002608 A1.

### DESCRIPTION / SUMMARY OF THE INVENTION

It is therefore an objective of the invention to provide an improvement in the art. It is in particular an objective to provide a versatile crawler for inspection and working of cylindrical structures, especially jacket structures in splash zones. These and further objectives and advantages are achieved by a device as explained in detail in the following.

The device is constructed for moving along a cylindrical structure, such as a pipe. For sake of convenience and later reference, it needs mentioned that the cylindrical structure has a longitudinal direction parallel with a central longitudinal axis of the structure.

The device comprises a first clamping unit and a second clamping unit, which are configured for selectively clamping around the structure to hold the respective clamping unit fixed to the structure at a position of the structure.

Each of the clamping units comprises a substantially U-formed rigid segment, forming a gap for taking up the structure inside the gap against a stationary roller or stationary rollers, for example a set or several sets of stationary rollers. Typically, the rigid segments are formed as flat plate-like flanges, for example made of aluminium or stainless steel, with a thickness sufficient for giving high rigidity.

If a single stationary roller or a single set of stationary rollers is provided, the position is typically in the bottom of the U-shaped gap, where the bottom is opposite to the opening of the gap. If several stationary rollers are distributed in the gap, the positions can vary inside the gap.

Each of the clamping units also comprises pivotal grippers at the ends of the rigid segments, where the ends form the opening of the gap and are opposite to the bottom of the gap. Transverse actuators are connected to the grippers and arranged for pivoting the grippers into a clamping orientation by which the structure is clamped inside the gap by the grippers. The grippers comprise rollers, which in contrast to the stationary rollers are movable rollers due to the pivoting of the gripper. The rollers have an axis of rotation oriented parallel the longitudinal axis of the structure for rolling transversely around the structure, perpendicular to the longitudinal axis, when the structure is clamped inside the gap, for movement of the device in a circular motion around the structure.

In summary, each of the clamping units comprises a stationary roller inside the gap in addition to the movable rollers on the pivotal gripper in order for the structure to be held inside the gap between the stationary roller and the rollers on the two grippers.

The clamping units can then move around the structure by rolling on the stationary rollers as well as the moveable rollers on the grippers.

The two clamping units are connected to each other by a plurality of longitudinal actuators, acting synchronous in parallel when varying the distance between the two clamping units. These are used when the device is moving along the structure according to an inchworm principle in which the clamping units alternately clamp and release the structure, while the actuators first advance the first clamping unit relatively to the second clamping unit, while only the second clamping unit is clamping the structure, and then drag the second clamping unit towards the first clamping unit, while only the first clamping unit is clamping the structure.

During crawling of the device along the structure, for example pipe, the device may encounter obstacles, for example cross pipes or other objects extending from the structure. In order for the device to crawl past such structures, the following embodiment is useful. For this situation, the combination of the rigid segments and pivotal grippers are arranged for only partially enclosing the pipe and not closing the gap of the clamping unit, even when in clamping operation. By providing space by the gap, objects that extend from the partially enclosed structure and which otherwise would prevent crawling of the device past the objects can pass through the gap while the device is crawling along the structure.

In most cases, two clamping units are sufficient for the crawling and the working capabilities. For crawling past obstacles that extend from the cylindrical structure, in some cases, more than two clamping unit can be an advantage.

As an option, the device comprises a third clamping unit and potentially even further clamping units which cooperate for the crawling procedure. For example, for a device with three clamping units, the two outer clamping units may clamp while the middle clamping unit is moved towards the leading clamping unit, after which the trailing clamping unit is dragged towards the middle clamping unit. Then, the leading clamping unit is advanced while the other two clamping units are clamping the structure.

In practical embodiments, each of the clamping units comprises two of said rigid segments arranged in parallel with each other and with a space in between. This space is used for protection of the moving elements, including the transverse actuators which are accommodated in this space between the two rigid segments.

For example, each transverse actuator is connected to an arm that is rotationally coupled to the corresponding gripper for pivot of the gripper around an axle during actuation by the transverse actuator for bringing the rollers into or out of contact with the structure.

Advantageously, also the arm and potentially also a part of the pivoting gripper is accommodated between the rigid segments. As the arm is well protected in the space between the rigid segments, the arm can be made of less solid material, for example thinner material, than the rigid segments, which spares material and minimizes weight of the device.

In an aspect, the device comprising at least one nozzle positioned in a common plane with at least one roller, wherein the common plane being perpendicular to the longitudinal direction. The structure will almost always have some degree of marine growth, the marine growth may in many cases be slippery which will cause the rollers to slip and thereby preventing rotation of the device around the structure. However, preliminary tests have shown that a nozzle positioned in a common plane with the at least one roller, wherein the common plane being perpendicular to the longitudinal direction enables the nozzle to clean the surface enabling the roller to better grip the surface thus enabling a rotation around the structure.

The roller will be a drive roller driving the device around the structure

The skilled person would know to position the nozzle near the roller such that the surface upstream, relative to the rotation of the device, to the roller is cleaned. Initial tests have shown that a single nozzle's cleaning is enough for the roller to get a sufficient grip.

The device will in an embodiment move using the inchworm principle and as the device moves forward the other rollers will begin to engage cleaned surfaces thereby improving the grip further.

The device is improved by adding more nozzles in common planes with other rollers along the device, however initial tests have shown that a single nozzle is sufficient to achieve the wanted technical effect being rotation of the device around the structure.

For working and inspecting the surface of the structure, one or more tools are mounted to one or more of the rigid segments. For example, the tool is at least one of the groups consisting of
- a cleaning tool for cleaning a surface of the structure, for example a high pressure water jetting or a steel brush;
- an inspection tool, typically a camera such as a high resolution camera for inspection of a surface of the structure i.e. CVI Close Visual Inspection, often including a lamp;
- a tool for measuring the diameter of the structure, for example a probe with two oppositely placed contact elements, where the probe measures the distance between the contact elements;
- an Eddy current inspection probe for measuring correctness of welding seams i.e. detecting fatigue cracks in welding seams or structure;
- an ultrasound measuring device for measuring wall thickness of the structure;
- a painting tool, for example a paint gun;
- a sandblasting device for removing paint;
- a probe for detecting flooded members.

The device can also be used for demounting pipe structures in sections, for example from pipelines and risers as well as from pipe-like support structures when breaking down i.e. decommissioning outdated offshore installations. For this function as well as for other uses, the device comprises a saw that is mounted to one of the rigid segments. The saw comprising an endless sawing wire moving over wire rollers, wherein the wire rollers are provided at a distance from each other for sawing through the structure when it is accommodated in the gap. Once a section of the structure has been cut off by the saw, the device can be used to lift the section onto a platform or a vessel.

In an embodiment, the saw may be pivotally mounted to one of the rigid segments around a pivot axis. The device may comprise an actuator adapted for pivoting the saw around the pivot axis.

Thereby, the device is enabled to cut the structure at an angle relative to the longitudinal direction of the structure. The angle may be 35-55 or 45 degrees relative to the longitudinal direction.

The initial cut in the structure will typically be angled as an angled cut easies the decommissioning, because the cut-off part of the structure can be more easily separated from the remaining structure.

Furthermore, the device can cut off structures at intersections between two non-perpendicular pipes such that the remaining structure has a flush surface which reduces the forces caused by waves compared to a structure with a non-flush surface.

The saw may be a diamond wire cutter.

In an embodiment, the device is used for decommissioning a structure.

In an aspect, the device comprises a tool mounted to one of the rigid segments, wherein the tool comprises an abrasive waterjet cutter adapted for cutting the structure, thereby the device can cut the structure using water and abrasive particles.

The cut can be 90 degrees cut or any other degree.

The abrasive waterjet cutter may be pivotally mounted to one of the rigid segments around a pivot axis. The device may comprise an actuator adapted for pivoting the saw around the pivot axis.

In order to save weight, the device is optionally free from ballast and/or buoyancy units in order to keep the size and weight of the device low.

A low volume of the device as well as open gaps between the rigid segments allows water to flow through, giving less area of attack by the waves, which is important especially in turbulent splash zones.

Although, the device is especially useful for cylindrical structures subsea and in splash zones, the device is also useful for crawling along other rigid or even bendable pipe structures, for example risers, subsea cables and hoses. It would then be correspondingly dimensioned.

Typical dimensions for the cylindrical structure to be accommodated in the gap are in the range of 0.2 to 2 meter, or up to 3 meter or up to 4 meter.

The material not for the rigid segments but also the arms and grippers as well as axles are advantageously made of aluminium or stainless steel with a minimized risk for corrosion in salty water and for providing sufficient rigidity and strength.

In an aspect, the device comprises a tool mounted to one of the rigid segments, wherein the tool being an ultrasound measuring device.

In an embodiment, the device comprises at least one nozzle positioned in a common plane with at least one roller, wherein the common plane being perpendicular to the longitudinal direction, wherein the ultrasound measuring device is positioned in the common plane.

The ultrasound measuring device should be in direct contact with the surface of the structure and even 1 mm of residual matter such as dirt or marine growth will disturb the measurement. The jet nozzle will clean off any residual matter prior to performing the ultrasound measurement, thereby ensuring a clean surface for the ultrasound measurement.

Thereby, the nozzle enables the device to rotate around the structure by cleaning the surface of the structure and thereby enabling a proper grip of the rollers, and the cleaned surface can afterwards be measured with the ultrasound measuring device.

In an embodiment, the device is used for measuring a wall thickness of the structure.

In an aspect, the device comprises a tool mounted to one of the rigid segments, wherein the tool comprises a probe for detecting if a structure is flooded. The skilled person would know which probe to choose in order to detect if a structure is flooded.

The probe for detecting flooded members may be an ultrasound measuring device.

In an aspect, the device comprises a tool mounted to one of the rigid segments, wherein the tool comprises an eddy current inspection probe for inspecting welds and structure for cracks often caused by fatigue as a result of cyclic stresses (wave impacts) that are below the ultimate tensile stress.

The offshore structure is exposed to large forces from the sea, especially in the splash zone the structures experience millions of wave impacts each year causing metal fatigue.

Welding seams including the heat affected zones (HAZ) and parts of the structure near the heat affected zones are most sensitive to these forces and thus the metal fatigue will typically first be detected at the seams.

The eddy current inspection probe will inspect a welding seam including the heat affected zones (HAZ) and parts of the structure near the heat affected zones to determine cracks due to fatigue in the metal.

In an embodiment, the eddy current inspection probe is attached to a robot arm, such that the probe easily can measure on both sides of a welding seam.

The robot arm may be 3- or 5-axis robot arm.

The robot arm may comprise an upper arm and a lower arm connected by a pivotal joint, such that the extent of the probe can be changed, thereby enabling a measurement on both sides of the seam without moving the device between measurements on both sides of the seam.

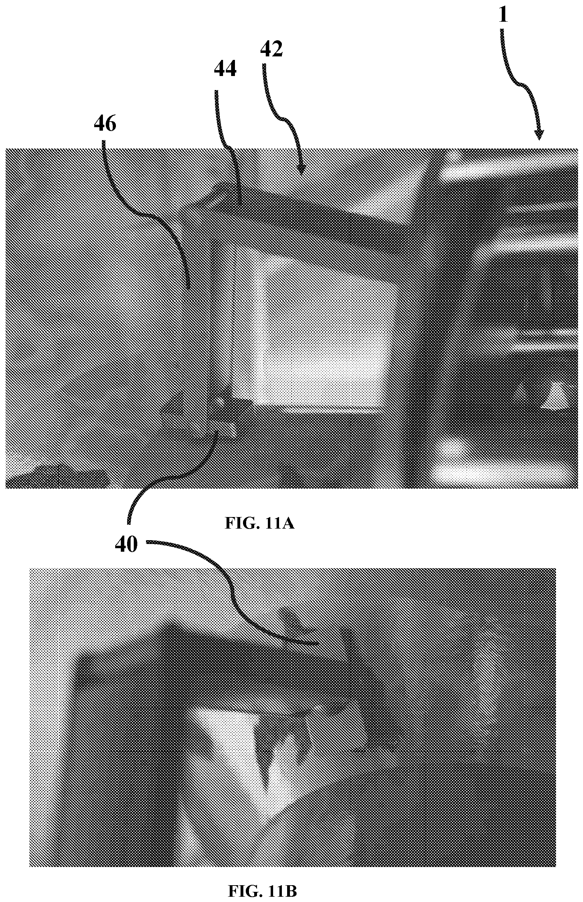

In an embodiment, the eddy current inspection probe is pivotally connected to the robot arm. Thereby, the eddy current inspection probe can orientate to any surface. This is especially important when measuring a seam between two non-parallel structures, such as two structures being mutually perpendicular as shown in figure 11.

In an embodiment, the device is used for inspection of a welding.

In an aspect, the device comprises a tool mounted to one of the rigid segments, wherein the tool comprises a cleaning tool. Thereby, the device is able to clean the structure.

In an embodiment, the cleaning tool comprising one or more nozzles, the one or more nozzles being adapted for having a substantial tangential spray direction relative to the structure. Any marine growth and/or fouling adhering to the surface can be removed faster as the tangential spray direction enables the nozzles to attack the contact area between the marine growth and/or the fouling and the structure, this contact area is the weakest link. Thereby, the spray becomes a wedge between the structure and the marine growth and/or the fouling.

In an embodiment, the cleaning tool comprising a series of three nozzles adapted for creating a common spray column for acting as a wedge against any marine growth and/or fouling.

In an embodiment, the device comprising a jet nozzle near the rigid segment adapted for cleaning the structure by removing any residual matter still adhering to the surface for improving the grip at one of the rollers to enable the device to rotate around the structure. The device may have more jet nozzles for improving the grip at the position of the other rollers.

The jet nozzle positioned at the rigid segment of the device has a smaller aperture than the other nozzles and as a consequence the water pressure becomes higher.

An aspect of the invention is achieved by use of the device for removal of marine growth and/or fouling.

In an aspect, the device comprises a tool mounted to one of the rigid segments, wherein the tool comprises a blasting nozzle. The blasting nozzle may be a sand blasting nozzle or a grit blasting nozzle or a dry ice blasting nozzle.

The dry ice blasting nozzle is preferred to the sand blasting nozzle and grit blasting nozzle, because sand blasting nozzles and grit blasting nozzles use a large amount of sand and grit, and according to the law the sand and grit must be collected after use which is difficult on offshore structures.

The dry ice will evaporate after use thereby leaving no residual material to be collected, which will lower operation costs.

In this application the dry ice may be solid CO2 or solid N2.

The blasting nozzle is able to remove rust and paint from the surface of the structure to ensure the correct roughness before paint is reapplied to the surface of the structure.

In an embodiment, the device is used for removing paint from a structure.

In an aspect, the device comprises a tool mounted to one of the rigid segments, wherein the tool comprises a paint nozzle. The paint nozzle enables the device to paint the structure. The paint will protect the structure from corrosion and the adherence between the structure and marine growth or fouling will be reduced, thereby making it easier to remove any marine growth or fouling.

In an embodiment, the device is used for painting a structure.

In an aspect, the device comprises a tool mounted to one of the rigid segments, wherein the tool comprises a blasting nozzle and a paint nozzle. Thereby, the device can first blast the surface followed by painting the same surface.

In an embodiment, the device having a blasting nozzle and a paint nozzle is used for improving corrosion resistance of a structure.

The blasting will expose the surface of the structure to corrosion, thus the total lifetime of the structure will increase by shortening the period between blasting and painting.

A device in combination with a tool mounted to one of the rigid segments, wherein the tool comprising a probe adapted for determining if a structure is flooded. The skilled person would know which probe to use.

An object of the invention is achieved by a container comprising a device, wherein the container comprises one or more tools enabling the device to be modified into a device having one or more of the previously mentioned tools.

The cylindrical structure will typically be part of an offshore structure far from land, thus the container enables the device to be delivered by a vessel.

In an embodiment, the container suspends the device using wires for preventing damage of the device during transportation.

There may be a second separate container being adapted to be a control container having the equipment enabling a person to control the device and optionally a ROV (remote operated vehicle).

In an exemplary embodiment, a kit comprises a ROV having a first connector for gripping the device, wherein the device having a second connector being adapted complementary to the first connector.

Thereby, the device can be delivered in a safe and reliable way to the part of the structure to be worked on by the tools carried by the device as this will further increase the speed of the operation, because the device is delivered with a higher precision.

In an embodiment, the device may comprise any one of the above-mentioned tools, but being without any means for moving along the structure, because the movement along the structure can be facilitated by the ROV.

In an embodiment, the device comprises a single clamping unit, which is configured for selectively clamping around the structure to hold the device. The single clamping unit comprises a substantially U-formed rigid segment forming a gap for taking up the structure inside the gap against a stationary roller; wherein the single clamping units also comprise pivotal grippers at opposite ends of the rigid segment and transverse actuators connected to the grippers and arranged for pivoting the grippers into a clamping orientation whereby the structure is clamped inside the gap by the grippers, wherein the grippers comprise rollers oriented for rolling around the structure perpendicular to the longitudinal direction, when the structure is clamped inside gap, for movement of the device in a circular motion around the structure, wherein the segment comprises a tool as previously described.

The single clamping unit may comprise at least one jet nozzle positioned in a common plane with at least one roller or set of rollers, wherein the common plane being perpendicular to the longitudinal direction. The jet nozzle increases the grip between the roller and the structure.

Thereby, the device can be delivered in a safe and reliable way to the part of the structure to be worked on by the tools carried by the device as this will further increase the speed of the operation, because the device is delivered with a higher precision.

The skilled person would know that the ROV is a subsea ROV.

In an exemplary embodiment, a method for working a subsea cylindrical structure, the method comprising acts of:
- providing a cage releasably holding a device having a second connector and a tool for working the structure;
- providing a ROV having a first connector complementary to the second connector;
- providing a control central connected to the device and ROV by cables;
- releasing the device from the cage by the ROV engaging the second connector with the first connector;
- steering the ROV with the device to the subsea cylindrical structure;
- controlling the correct working position of the device on the structure;
- working the structure by the tool while the device is clamped to the structure,
- moving the device around the structure for working different regions on the structure.

The device may comprise a single clamping unit or a first clamping unit and a second clamping unit along with the previously described features for enabling the inchworm principle. In both cases the device must have roller for enabling the device to turn around the structure.

The skilled person would know how to connect the device with an umbilical with signal transfer cables and power provision for the actuators and transverse actuators as well as for the tool.

The skilled person would likewise know how to connect the ROV with an umbilical with signal transfer cables and power provision.

### SHORT DESCRIPTION OF THE DRAWINGS

The invention will be explained in more detail with reference to the drawing, where
- FIG. 1: illustrates an example of a crawler device in a) a first , b) a second and c) a third perspective view;
- FIG. 2: shows a photo of the crawler device on a pipe in a workshop;
- FIG. 3: show photographs of the crawler device on a pipe structure in a splash zone, where a) is an overview photo, b) shows the device in one position and orientation, and c) in another position and orientation,
- FIG. 4: is a photograph of the device with some tools mounted to the rigid segment;
- FIG. 5: is a photograph with a wire saw;
- FIG. 6: illustrates a container for transporting a device along with the necessary tools and HPU, valve station and high pressure water jetting unit;
- FIG. 7: illustrates a device having a tool being lowered;
- FIG. 8: illustrates a device having a cleaning tool working on a structure;
- FIG. 9: illustrates a device having a visual inspection system and the view for the operator in the control container;
- FIG. 10: illustrates a device having a ultrasound measuring device;
- FIG. 11: illustrates a device having an eddy current inspection probe;
- FIG. 12: illustrates a device having a pivotal wire-saw;
- FIG. 13: illustrates a device having a wire-saw extending along a longitudinal axis of a structure able to perform circumferential cuts;
- FIG. 14: illustrates a device having blasting nozzle and a paint nozzle;
- FIG. 15: illustrates a cage holding a device and a ROV; and
- FIG. 16: illustrates another embodiment of a ROV and a device.

| **Item** | **Reference** |
|---|---|
| Device | 1 |
| First clamping unit | 2A |
| Second clamping unit | 2B |
| Plurality of actuators | 3 |
| Longitudinal direction | 4 |
| Pipe, Structure | 5, 5' |
| Rollers | 6, 6' |
| Axle | 7 |
| U-shaped segment | 8 |
| Pivotal grippers | 9 |
| End | 10 |
| Pivot-axle | 11 |
| Transverse actuators | 12 |
| Brackets | 13 |
| Arm | 13' |
| Stabilizing bracket | 14 |
| Bushings | 15 |
| Lifting eye | 16 |
| Umbilical | 17 |
| Wire | 18 |
| Camera | 19 |
| Fluid cleaning nozzle | 20 |
| Projectors | 21 |
| Brackets and holders | 22 |
| Gab | 23 |
| Wire-saw | 24 |
| Space | 25 |
| Pivot axis | 26 |
| Second connector | 27 |
| Rods | 281, 28II |
| Ultrasound measuring device | 30 |
| Jet nozzle | 32 |
| Eddy current inspection probe | 40 |
| Robot arm | 42 |
| Upper arm | 44 |
| Lower arm | 46 |
| Cleaning tool | 50 |
| Nozzles | 52 |
| Blasting nozzle | 60 |
| Paint nozzle | 65 |
| Container | 100 |
| Wires | 110 |
| ROV | 200 |
| First connector | 210 |
| Cage | 220 |
| Control central | 300 |

### DETAILED DESCRIPTION / PREFERRED EMBODIMENT

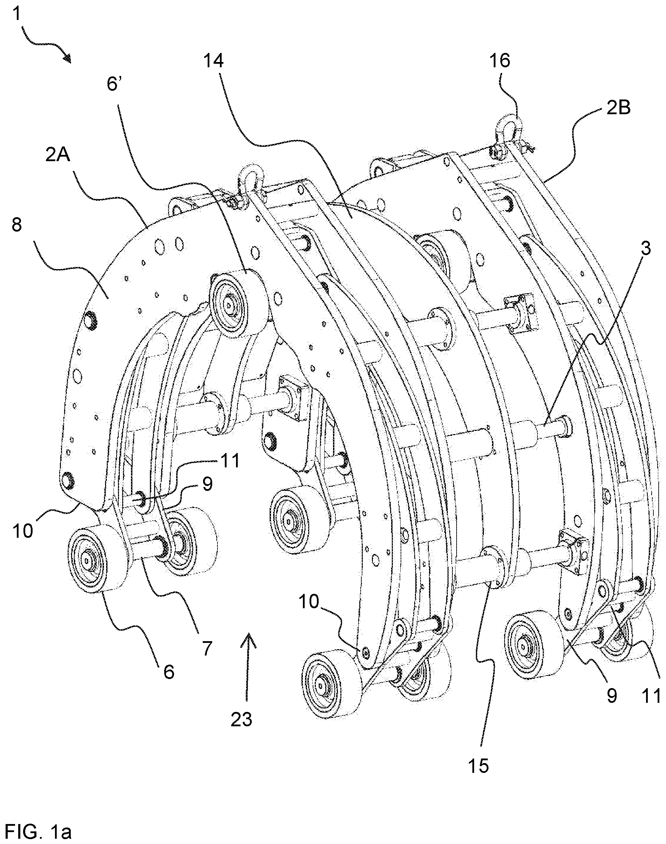

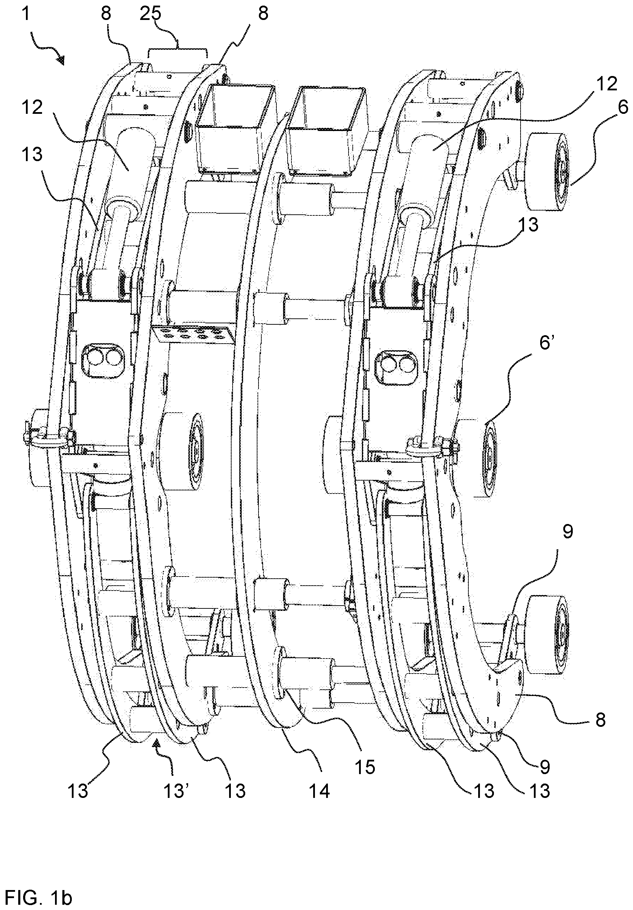

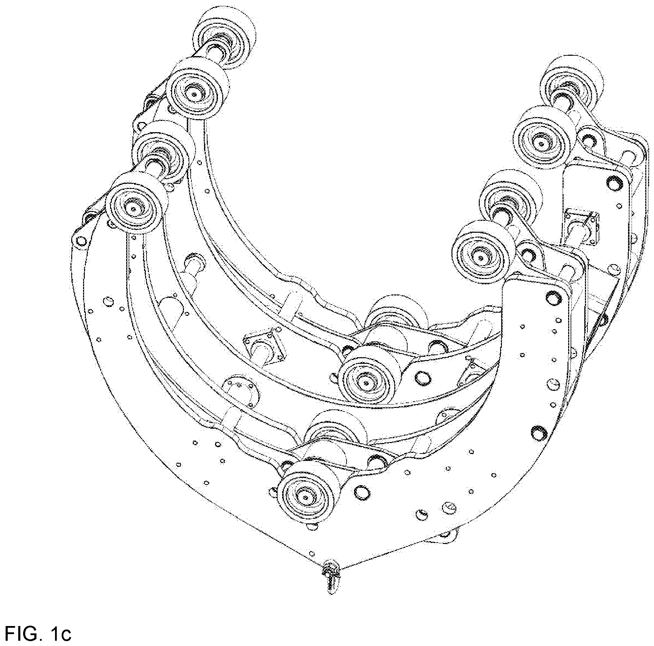

FIG. 1 illustrates an embodiment of a device 1 for moving along a cylindrical structure, for example the sections of a jacket of an offshore platform. However, the device 1 could also be used on other types of cylindrical structures, for example pipes. The terminology in the technical field of offshore industry for such device as presented herein is crawler.

The cylindrical structure is typically a pipe due to its hollow interior, although the structure/pipe is not necessarily used for transporting fluids in it. For example, the jacket of an offshore platform is often made of hollow cylindrical sections of steel pipes that are welded together to form a frame that supports an offshore platform. Also, the device is similarly applicable for solid cylindrical structures, not only pipes.

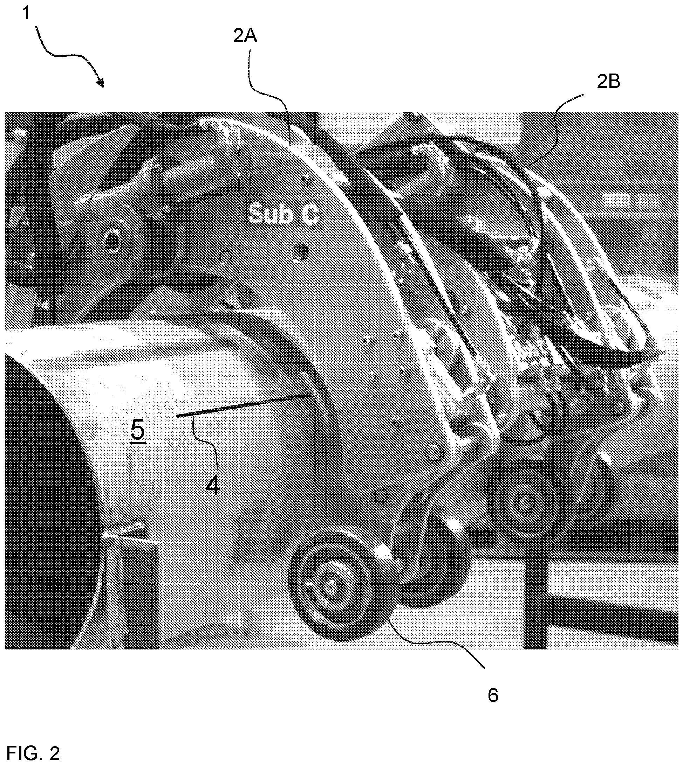

The device 1 comprises a first clamping unit 2A and a second clamping unit 2B, both configured for clamping around a structure, for example a pipe 5 as illustrated in FIG. 2.

In the following, the invention is explained in relation to a pipe, although it applies equally well to other cylindrical structures, like solid cylinders.

The two clamping units 2A, 2B are largely identical and are connected to each other by a plurality of actuators 3 that are arranged in parallel to each other and in parallel to a longitudinal direction 4 of a pipe 5 when the clamping units 2A, 2B are securing the pipe 5 by clamping.

The actuators 3 are used to move the device 1 along a pipe according to an inchworm principle, in which the clamping units 2A, 2B alternately engage and disengage with the outer pipe surface as the actuators 3 first advance the first and leading clamping unit 2A and then drags the trailing second clamping unit 2B towards the first clamping unit 2A. The terms leading clamping unit 2A and the term trailing clamping unit are used here only in relation to the direction of movement, where it is emphasized that the clamping units 2A, 2B change role when moving in the opposite direction.

In more detail, the moving sequence is as follows. One of the clamping units, which in relation to the motion will be called the leading clamping unit 2A is disengaged from the pipe, while the trailing clamping unit 2B is clamping the pipe and stays stationary with a longitudinal position of the pipe. This situation is illustrated in FIG. 2. Extension of the actuators 3 leads to a push movement of the leading clamping unit 2A away from the trailing clamping unit 2B in a direction parallel with the actuators 3 and along the longitudinal direction 4 of the pipe 5. Then, the leading clamping unit 2A clamps the pipe 5 and stays stationary with the longitudinal position of the pipe 5 while the actuators 3 contract and thereby drag the trailing clamping unit 2B towards the leading clamping unit 2A. For moving further, the sequence is repeated.

In addition to a movement along the longitudinal direction 4 of the pipe 5, the device 1 is also capable to move around the pipe 5.

In the above description of the inchworm movement, the term "longitudinal position of the pipe" has been used to express that the respective clamped clamping unit is not moving along the longitudinal direction of the pipe. However, the clamping unit may optionally during the inchworm movement rotate around the pipe 5. Typically, however, the rotational movement around the structure is done when both clamping units 2A, 2B are clamping the structure. For such movement, rollers 6, 6' are provided on the clamping units 2A, 2B.

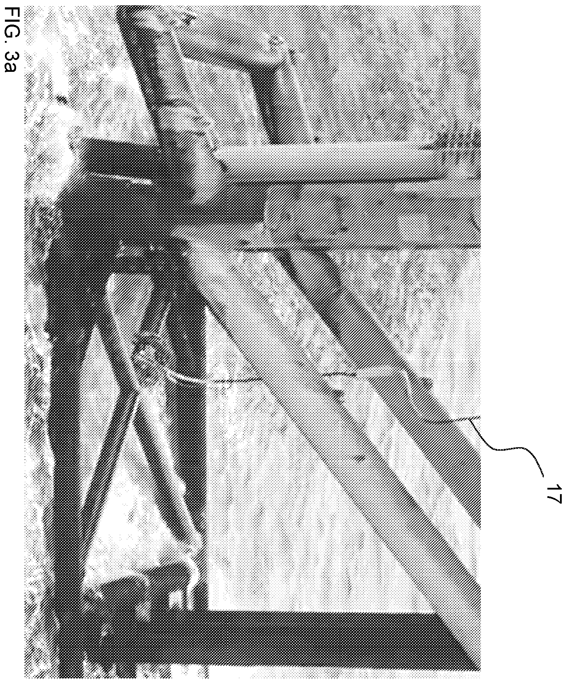

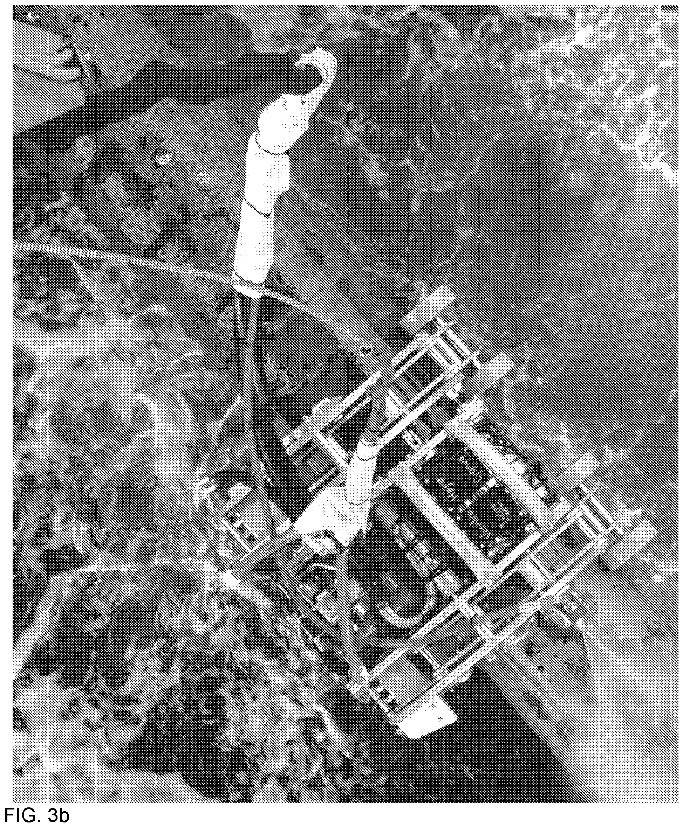

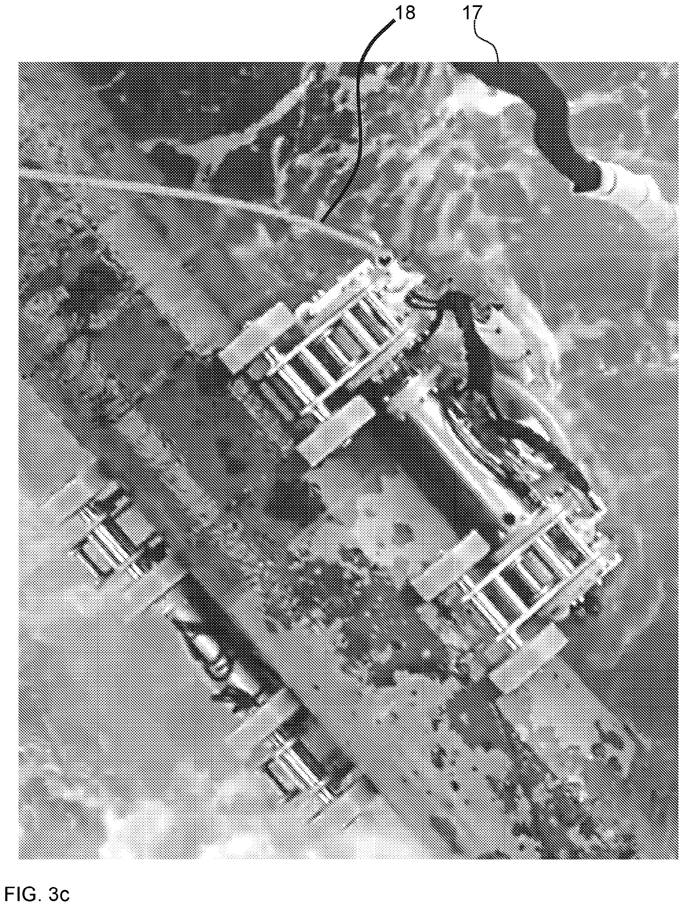

A cylindrical structure, in the form of a pipe, which is part of a platform jacket is shown in the photograph of FIG. 3a. Movement of the device 1 around the structure is illustrated with photos in FIG. 3c relatively to the orientation of the device in FIG. 3b In the exemplary embodiment shown in the FIG. 1, each clamping unit 2A, 2B has three sets of two rollers 6, 6'. The number of sets and the number of rollers 6, 6' per set is an example only and can be different. The two rollers 6, 6' in a set are rolling on an axle 7 which is also parallel to the longitudinal direction 4 of the pipe 5. By engaging the rollers 6, 6' with the surface of the pipe 5, the clamping units 2A, 2B can be moves around the pipe 5 in a direction tangential to the cylindrical surface of the pipe 5.

The two clamping units 2A, 2B are not encircling the entire pipe but comprise substantially U-shaped rigid segments 8 that are lifted down onto the pipe 5 with the pipe 5 being accommodated in a gap 23 of the clamping units 2A, 2B. At the bottom of the U-shaped segment 8, one set of stationary rollers 6' are provided.

The term "bottom" is used herein irrespective of the orientation of the segment 8. The bottom is opposite to the opening of the gap 23.

Once the structure has been accommodated in the gap 23 against the stationary rollers 6', two sets of movable rollers 6 on pivotal grippers 9 at ends 10 of the rigid segments 8 are pivoted into a pipe-engaging position used for clamping the clamping unit 2A, 2B onto the pipe 5.

The pivotal grippers 9 are pivoting about a pivot-axle 11 that is held in and between neighbouring rigid segments 8 of one of the clamping units 2A, 2B. Activation of the pivotal grippers 9 for engagement or disengagement with the pipe 5 is accomplished by transverse actuators 12, best seen in FIG. 1b. By elongation or contraction of each transvers actuator 12, two parallel, oppositely placed and mutually connected brackets 13 form an arm 13' that is translated and which is rotationally coupled to the pivotal gripper 9 of a pair of rollers 6. The transverse actuators 12 and the arm 13' are protectively accommodated in the space 25 between the two rigid segments 8 of each clamp unit 2A, 2B. Depending on the direction of activation of the transvers actuators 12, the pivotal grippers 9 are pivoted and the rollers 6 brought into or out of engagement with the pipe 5.

When the pivotal grippers 9 are pressing the rollers 6 against the pipe 5, the combination of rigid segments 8 and pivotal grippers 9 only partially enclose the pipe 5 and do not close the gap 23 of the clamping unit 2A, 2B. This is an advantage when the device 1 has to pass cross pipes or other objects extending from the partially enclosed pipe 5. In case of such an obstacle extending from the pipe 5, the device 1 is positioned towards the opposite side on the pipe so that the device 1 can pass with the obstacle in the gap 23.

A stabilizing bracket 14, which to a large extent follows the U-shape of the rigid segments 8 is provided between the two clamping units 2A, 2B, and the actuators 3 extend through bushings 15 which are rigidly provided on the bracket 14.

The device 1 as a basic unit is provided very simple in that is consists substantially only of two clamping units 2A, 2B that are connected to each other by actuators 3 through the stabilizing bracket 14. Each clamping unit 2A, 2B comprises three sets of rollers 6, 6' of which at two sets of rollers 6 for each clamping unit 2A, 2B, are on pivotal grippers 9, pivoted by one transverse actuator 12 for each set of the two sets of rollers 6 per clamping unit 2A, 2B.

On the rigid segments 8 and on the bracket 13, various tools can be mounted. Examples of tools are inspection tools, including cameras to inspect the surface of the pipe visually and including sensors that inspect the surface of the pipe by contact with the pipe, for example measuring roughness or distances, such as pipe diameter. By providing two oppositely and correspondingly calibrated contact sensors, the diameter of a pipe can be measured precisely.

The device comprises a lifting eye 16 on each clamping unit 2A, 2B, which is used for lifting and lowering the device 1 by a wire 18, for example as illustrated in FIG. 3c.

In practice, for remote control of the functioning of the device 1 as well as for transferring signals, the device 1 is connected by a bendable umbilical 17, as it is shown in FIG. 3. Such umbilical 17 comprises an armoured protective sheath that contains cables, electronic or fiber optical, for signal transfer between a control station and the various tools and the necessary electricity and/or hoses for hydraulics or pneumatics for driving the actuators and possible valves related to the device 1 and the tools. In case of the tool also comprising painting tools or sandblasting tools or tools for chemically treating the surface, the umbilical would also contain the necessary tubes for providing the needed material and substances.

For example, the control station is provided on a ship or on the offshore installation and equipped with a user interface and video monitors for controlling and operating the device movement as well as the tools. For example, the control station is provided as a container unit to be lifted from a vessel onto the offshore installation for ease of transportation. Alternatively, the signals for the control station are transmitted wire-lessly to an onshore control station.

In order to ease manoeuvring of the device on the pipe 5 structure, the device 1 or the tools are potentially equipped with accelerometer and gyrocompass.

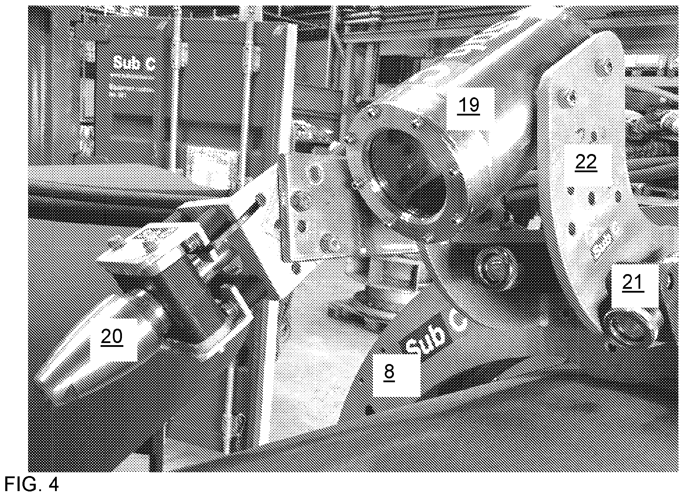

In FIG. 4, which is a photograph of the device in a workshop, a tool arrangement is shown comprising a camera 19, a high pressure fluid cleaning nozzle 20, as well as projectors 21 for light in order to provide sufficient illumination for the camera 19 so that the procedure can be tracked from a remote control centre, which receives data that have been transmitted through the umbilical 17. The tools are mounted on corresponding brackets and holders 22 on the rigid segment 6 of the clamping unit 2A, 2B. For example, the tools are used for cleaning the surface and for inspection so that cracks or deformations of the pipe can be detected. Cleaning is optionally done by sand blasting.

A further possible inspection tool is an ultrasound sensor for inspecting the local thickness of the material of the pipe. An even further possible tool is an Eddy current sensor for test of weldings.

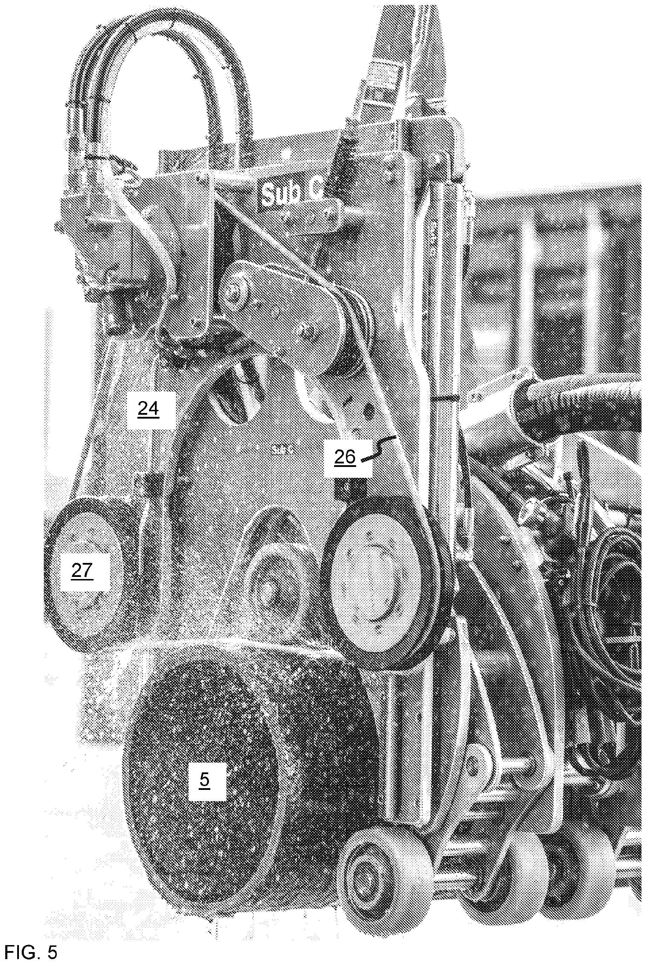

The device 1 can also be used for demounting pipes or for removing pipe sections. For such task, the device 1 can be equipped with a wire-saw 24, as illustrated in FIG. 5. The wire-saw 24 is mounted on a rigid segment 8 and comprises a cutting wire 26, for example comprising diamonds or other hard particles, such as tungsten carbide, on its surface. When the wire-saw 24 is activated, the cutting wire 26 is running over corresponding wire-rollers 27 and by the wire-rollers held against the pipe 5 for cutting its way through the pipe 5 material, while the pipe 5 is accommodated inside the gap 23.

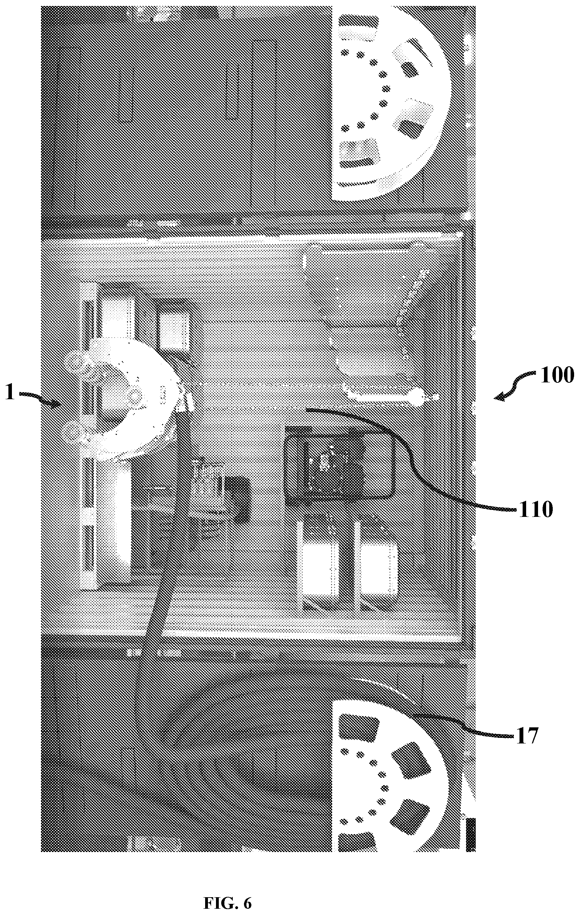

Fig. 6 illustrates a container 100 for transporting a device 1 along with the necessary tools and HPU, valve station and high pressure water jetting unit and umbilical 17 for providing the necessary signal cables, power cables, and optionally other cables, including cables for providing water under pressure, or cables for providing sand or grit or dry ice or paint.

The device 1 is suspended from container wires 210, thereby enabling the device to be transported without the risk of damaging impacts.

Although not shown in this figure, there may be a control center 300 in another container sent together with the container 100. The control center 300 having all the means to be able for a person to control the device 1 and optionally a ROV 200.

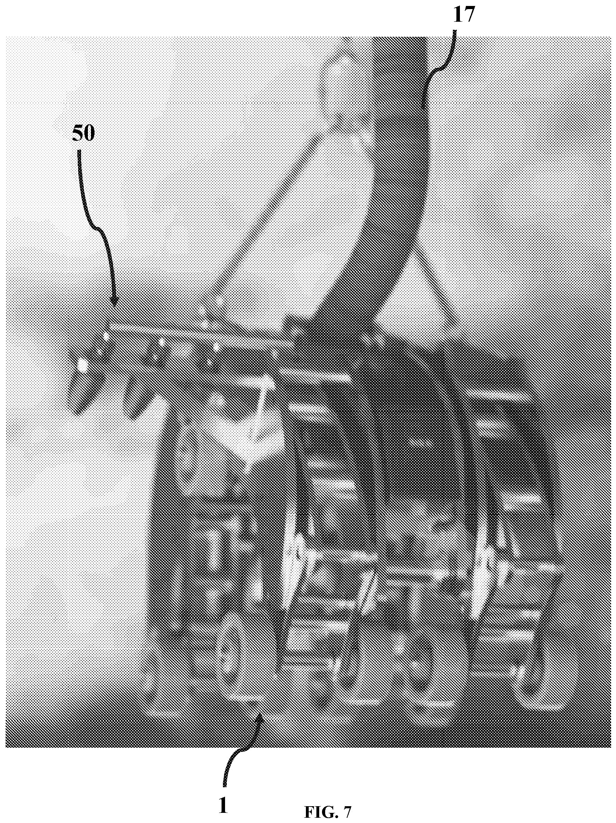

Fig. 7 illustrates a device 1 having a tool being a cleaning tool 500 comprising nozzles 52. The device 1 being lowered using a hoisting system along with an umbilical 17 having the necessary cables to be able to control the device 1.

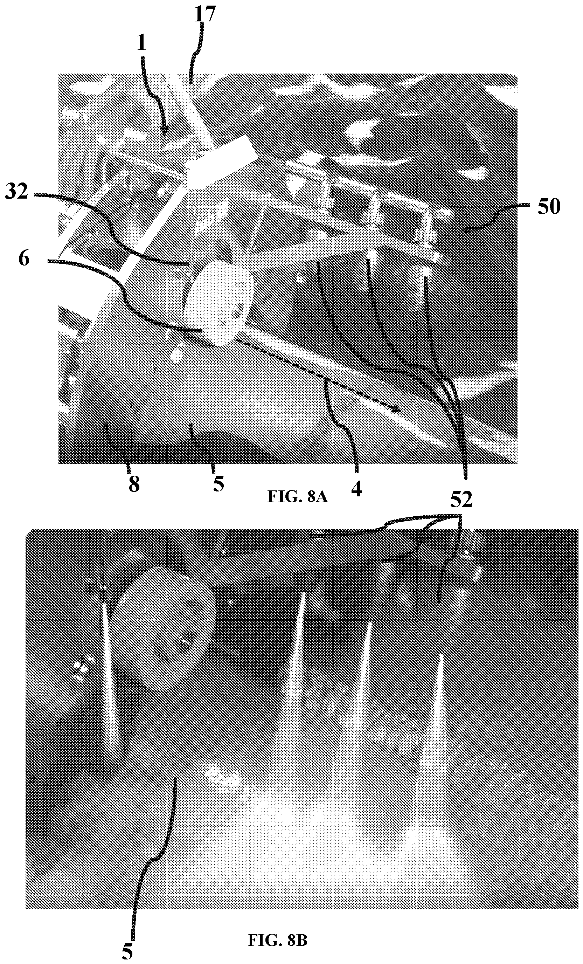

Fig. 8 illustrates a device 1 having a cleaning tool 50 working on a structure 5.

The cleaning tool 50 comprises three nozzles 52 being angled such that the spray direction of the nozzles 52 is substantially tangentially to the structure 5 as this makes it easier to remove marine growth from the structure.

The nozzles 52 are lined-up to form a common wedge.

The device 1 further comprises a jet nozzle 32 positioned in a common plane as a roller 6, wherein the common plane is substantially perpendicular to a longitudinal direction 4 of the structure 5. The jet nozzle 32 is positioned upstream to the roller 5 relative to the rotation direction such that the jet nozzle 32 removes any residual marine growth or fouling from the structure 5, which will improve the grip of the roller 6 to the structure 6 significantly. This is due to slippery surface of marine growth or fouling causing the roller 6 to otherwise slip.

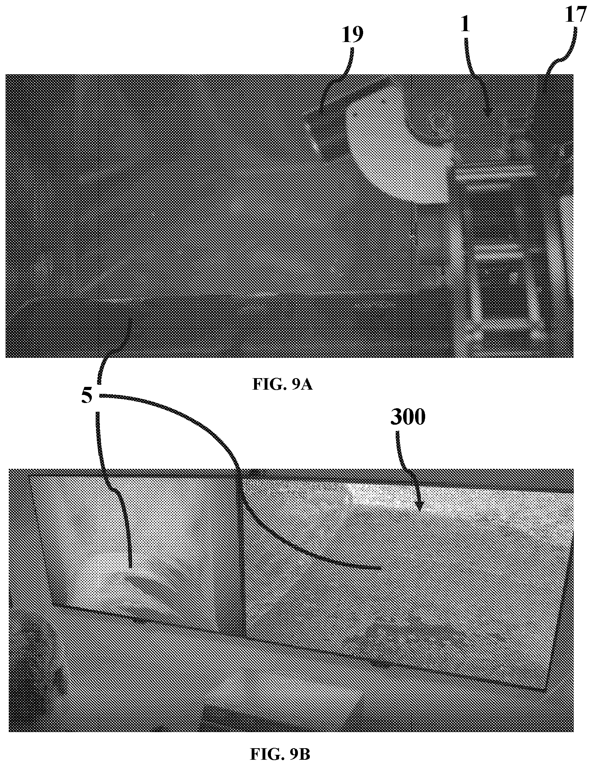

Fig. 9 illustrates a device 1 having a visual inspection system 19 and the view for an operator sitting in the control container 300. The operator can operate the device 1, and the signals and power are sent through cables in the umbilical 17

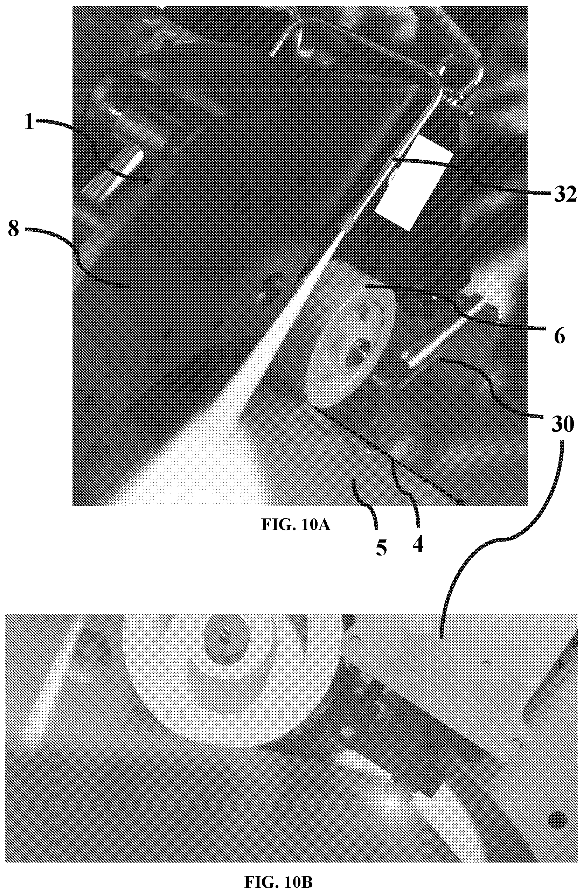

Fig. 10 illustrates a device 1 having an ultrasound measuring device 30 for determining a thickness of a structure 5.

The ultrasound measuring device 30 must be in close contact with the structure 5 to be able to receive proper data.

The device 1 further comprises a jet nozzle 32 positioned in a common plane as a roller 6, wherein the common plane is substantially perpendicular to a longitudinal direction 4 of the structure 5. The jet nozzle 32 is positioned upstream to the roller 5 relative to the rotation direction such that the jet nozzle 32 removes any residual marine growth or fouling from the structure 5, which will improve the grip of the roller 6 to the structure 6 significantly. This is due to the slippery surface of marine growth or fouling causing the roller 6 to otherwise slip.

However, the jet nozzle 32 further improves the measurement of the ultrasound measuring device 30 since the ultrasound measuring device 30 can be in closer contact with the structure 5, thereby getting better measurements.

Thus, the jet nozzle 32, roller 6 and ultrasound measuring device 30 are positioned in the common plane.

Fig. 11 illustrates a device 1 having an eddy current inspection probe 40 for measuring inspecting welds and structure for cracks often caused by fatigue as a result of cyclic stresses (wave impacts) that are below the ultimate tensile stress.

Welding seams including the heat affected zones (HAZ) and parts of the structure near the heat affected zones are most sensitive to these forces, and thus the metal fatigue will typically first be detected at the seams.

Thus, the eddy current inspection probe 40 must be able to inspect the seam including the heat affected zones (HAZ) and parts of the structure near the heat affected zones to determine the metal fatigue.

In this embodiment, the device 1 holds the eddy current inspection probe 40 with a robot arm 42 comprising an upper arm 44 and a lower arm 46. However, the eddy current inspection could be controlled by a 3- or 5-axis robot arm.

The eddy current inspection probe 40 is here rotationally connected to the lower arm 46 to be able to properly connect with the different surfaces at the seam.

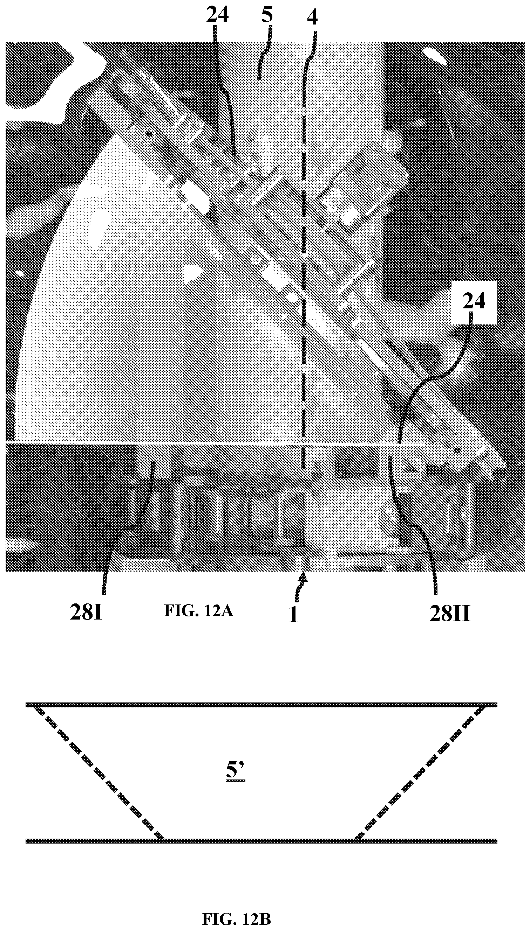

Fig. 12 illustrates a device 1 having a pivotal wire-saw 24 for decommissioning of a structure 5.

The wire-saw 24 is attached to the device 1 by two opposite positioned rods 28I, 28II, wherein each rod 281, 28II is displaceable between a retracted position and an extended position.

In the figure, the rod 28I is in the extended position and the rod 28II is in a retracted position thereby forming a substantially 45-degree angle between the wire-saw 24 and a longitudinal direction 4 of the structure 5. This can be reversed so that the rod 28I is in the retracted position and the rod 28II is in an extended position.

The wire-saw 24 is pivotally connected to the rods 28I, 28II thereby enabling the displacement.

This enables the device 1 to make a cut pattern as shown in fig. 12B as this makes it easier to remove structure 5' from the remaining structure 5 when doing the initial cuts.

The wire-saw 24 may be a diamond wire cutter.

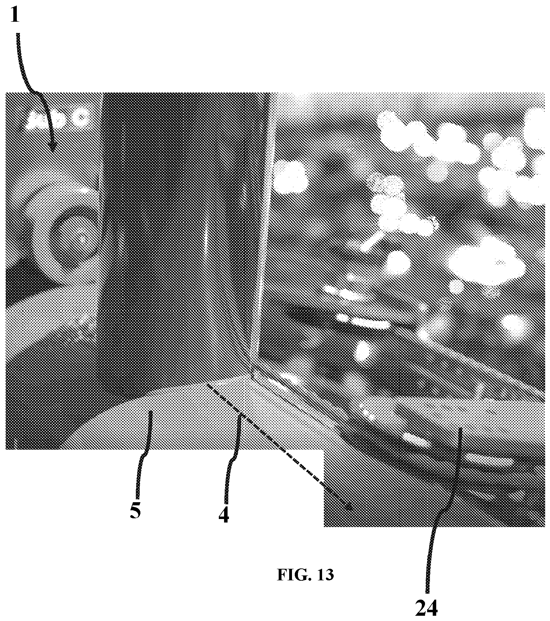

Fig. 13 illustrates a device 1 having a wire-saw 24 extending along longitudinal axis 4 of a structure 5 able to perform circumferential cuts.

The wire-saw 24 may be a diamond wire cutter.

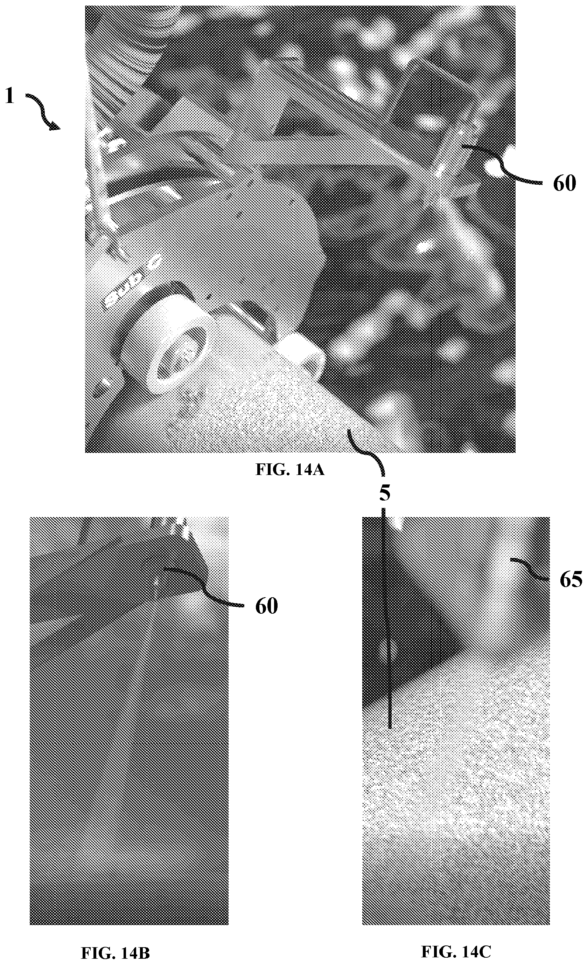

Fig. 14 illustrates a device 1 having a blasting nozzle 60 and/or a paint nozzle 65.

In figure 14A-14B the blasting nozzle 60 blasts the structure 5 with sand, or grit, or dry ice such as CO2 or N2, for **removing** the paint of the structure 5.

In fig. 14C the device 1 is equipped with a paint nozzle 65 for painting the structure 5 to protect the structure 5 from corrosion and to reduce the adherence of marine growth and fouling.

The device 1 can be equipped with both a blasting nozzle 60 and a paint nozzle 65 to reduce the period between removal and applying of new paint thereby decreasing the corrosion and increasing the lifetime of the structure.

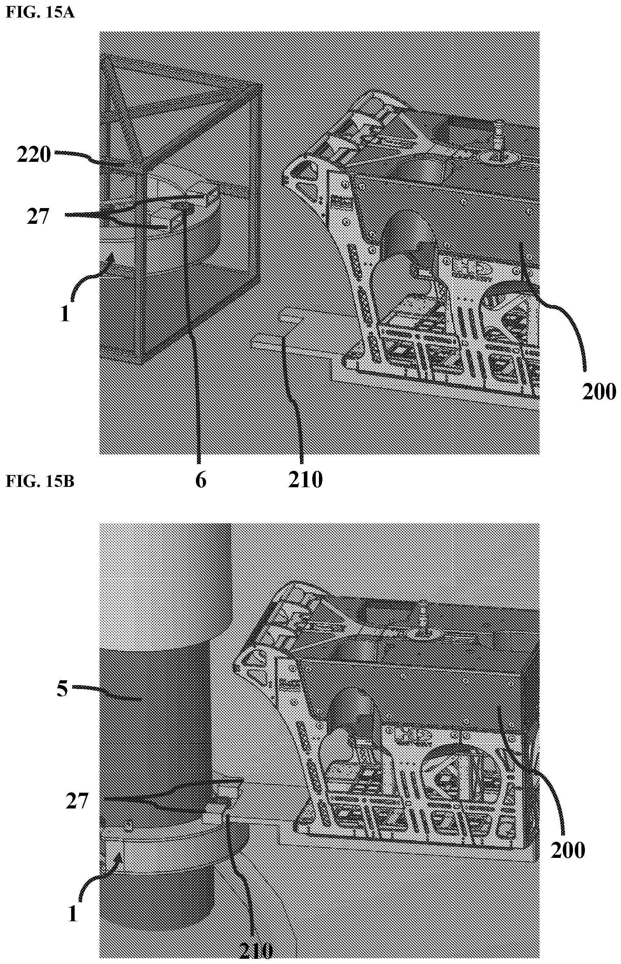

Fig. 15 illustrates a cage 220 holding a device 1 and a ROV 200 positioned subsea. The figure is simplified and as a consequence no cables or umbilical is shown, however the skilled person would know that the cage 220, the device 1 and the ROV 200 will be connected with a vessel or offshore structure above.

Likewise, the device 1 is disclosed without a tool, however the device may have any of the previously described tools.

The device 1 comprises a single clamping unit and is thus not able to move along any structure using the inchworm principle. However, rollers 6, 6' enable the device to rotate around the structure.

The device 1 further comprises a second connector 27 and the ROV comprises a first connector 210, wherein the second connector 27 and the first connector 210 are mutually complementary.

The device 1 is releasable from the cage 220 by the ROV engaging the device 1.

The ROV 200 will afterwards place the device 1 at the correct working position along the structure 5 for the device 1 to work the structure by the not shown tool.

The ROV 200 may afterwards reposition the device 1.

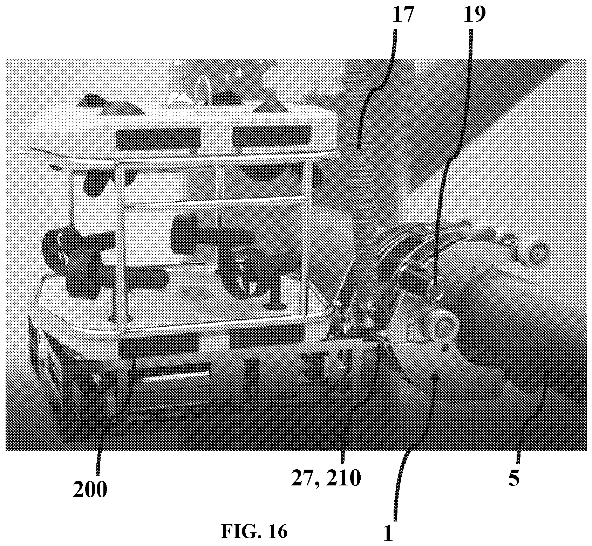

Fig. 16 illustrates another embodiment of a ROV 200 and a device 1.

The ROV 200 is positioning the device 1 at a subsea structure 5, wherein the device 1 is connected to a control central 300 by the umbilical 17. The device 1 comprises a camera 1 and is adapted for movement along the structure using the inchworm principle.

## Claims

1. A crawler (1) for moving along a cylindrical structure (5) and in a circular motion around the structure (5), wherein the structure (5) has a longitudinal direction (4), wherein the crawler (1) comprises a first clamping unit (2A) and a second clamping unit (2B), which are configured for selectively clamping around the structure to hold the respective clamping unit (2A, 2B) fixed to the structure, each of the clamping units (2A, 2B) comprising a substantially U-formed rigid segment (8) forming a gap (23) for taking up the structure (5) inside the gap (23); wherein each of the clamping units (2A, 2B) also comprise pivotal grippers (9) at opposite ends (10) of the rigid segment (8) and transverse actuators (12) connected to the grippers (9) and arranged for pivoting the grippers (9) into a clamping orientation by which the structure (5) is clamped inside the gap (23) by the grippers (9), wherein the two clamping units (2A, 2B) are connected to each other by a plurality of longitudinal actuators (3) arranged for acting synchronous in parallel for varying the distance between the two clamping units (2A, 2B); wherein the crawler (1) is configured for movement along the structure (5) according to an inchworm principle in which the clamping units (2A, 2B) alternately clamp and release the structure, as the actuators (3) first advance the first clamping unit (2A) relatively to the second clamping unit (2B) while only the second clamping unit (2B) is clamping the structure (5) and then drag the second clamping unit (2B) towards the first clamping unit (2A) while only the first clamping unit (2A) is clamping the structure (5), **characterised in that** each of the clamping units (2A, 2B) comprises a stationary roller (6') inside the gap (23) and the grippers (9) comprise rollers (6) for holding the structure (5) inside the gap (23) between the stationary roller (6') and the rollers (6) on the grippers (9), the rollers (6,6') being oriented for rolling the crawler (1) in a circular motion around the structure (5) perpendicular to the longitudinal direction (4), when the structure (5) is clamped inside the gap (23).

2. A crawler (1) according to claim 1, wherein the combination of the rigid segments (8) and pivotal grippers (9) are arranged for only partially enclosing the pipe (5) and not closing the gap (23) of the clamping unit (2A, 2B) even in clamping operation for providing space by an opening in the gap (23) for passing of objects that extend from the partially enclosed structure (5) and which otherwise would prevent crawling of the crawler (1) past the objects while the crawler (1) is crawling along the structure (5).

3. A crawler (1) according to any preceding claim, wherein each of the clamping units (2A, 2B) comprises two of said rigid segments (8) arranged in parallel with each other and with a space (25) between each other, and wherein the transverse actuators (12) are accommodated in this space (25) between the two rigid segments (8); wherein each transverse actuator (12) is connected to an arm (13') that is rotationally coupled to the corresponding gripper (9) for pivot of the gripper (9) around an axle (10) during actuation by the transverse actuator (12) along an actuation direction for bringing the rollers (6) into or out of contact with the structure (5) in dependence of the actuation direction of the transverse actuator (3).

4. A crawler (1) according to any one of the claims 1-3 in combination with a tool mounted to one of the rigid segments (8), wherein the tool is a camera (19) for inspection of a surface of the structure (5).

5. A crawler (1) according to any one of the claims 1-3 in combination with a saw (24) mounted to one of the rigid segments (8), the saw (24) comprising an endless sawing wire (26) moving over wire rollers (27), the wire rollers (27) being provided at a distance from each other for sawing through the structure (5) when accommodated in the gap (23).

6. A crawler (1) according to claim 5, wherein the saw (24) being pivotally mounted to one of the rigid segments (8) around a pivot axis (26) and the crawler (1) comprising an actuator adapted for pivoting the saw (24).

7. A crawler (1) according to any one of the claims 1-4 in combination with a tool mounted to one of the rigid segments (8), wherein the tool being an ultrasound measuring crawler (30).

8. A crawler (1) according to claim 7, wherein the tool further comprising a jet nozzle (32) adapted for cleaning a surface of the structure (5) upstream to the ultrasound measuring device (30).

9. A crawler (1) according to any one of the claims 1-3 in combination with a tool mounted to one of the rigid segments (8), wherein the tool comprising an eddy current inspection probe (40) for determining metal fatigue of the structure.

10. A crawler (1) according to claim 9, wherein the eddy current inspection probe (40) being attached to a robot arm (42).

11. A crawler (1) according to claim 10, wherein the eddy current inspection probe (40) being pivotally connected to the robot arm (42).

12. A crawler (1) according to any one of the claims 1-3 in combination with a tool mounted to one of the rigid segments (8), wherein the tool comprising a cleaning tool (50).

13. A crawler (1) according to claim 12, wherein the cleaning tool (50) comprising one or more nozzles (52), the one or more nozzles (52) being adapted for having a tangential spray direction relative to the structure (5).

14. A crawler (1) according to any one of the claims 1-3 in combination with a tool mounted to one of the rigid segments (8), wherein the tool comprising an abrasive waterjet cutter adapted for cutting the structure (5).

15. A crawler (1) according to any one of the claims 1-3 in combination with a tool mounted to one of the rigid segments (8), wherein the tool comprising a blasting nozzle (60), the blasting nozzle (60) being a sand blasting nozzle or grit blasting nozzle or dry ice blasting nozzle.

16. A crawler (1) according to any one of the claims 1-3 in combination with a tool mounted to one of the rigid segments (8), wherein the tool comprising a paint nozzle (65).

17. A crawler (1) according to claims 15 and 16, wherein the tool comprising the paint nozzle (65) and the blasting nozzle (60).

18. A crawler (1) according to any one of the claims 1-3 in combination with a tool mounted to one of the rigid segments (8), wherein the tool comprising a probe adapted for detecting if a structure (5) is flooded.

19. A crawler (1) according to any one of the preceding claims, wherein the crawler comprising at least one jet nozzle (32) positioned in a common plane with at least one roller (6), wherein the common plane being perpendicular to the longitudinal direction.

20. A method for working a cylindrical structure (5), for example a part of a jacket for an offshore installation, the method comprising:
- providing a crawler (1) according to anyone of the claims 1-3 with a tool for working the structure (5),
- providing an umbilical (17) connected to the crawler (1) with signal transfer cables and power provision for the actuators (3) and transverse actuators (12) as well as for the tool;
- lifting the crawler (1) onto the structure (5), for example the jacket in the splash zone;
- by the cables and power provision in the umbilical (17) remotely steering the crawler (1) along the structure (5) by causing crawling of the crawler (1) according to an inchworm principle;
- controlling the correct working position of the crawler (1) on the structure (5);
- working the structure (5) by the tool while the crawler (1) is clamped to the structure (5),
- moving the crawler (1) around the structure (5) for working different regions on the structure, for example both above and below the water surface in the splash zone.

21. A container (100) comprising a crawler (1) according to any one of claims 1-19, wherein the container (100) comprises one or more tools enabling the crawler (1) to be modified into a crawler (1) according to any one or more of claims 4-17.

22. A container (100) according to claim 21, wherein the container (100) suspends the crawler (1) using wires (110) for preventing damage of the crawler (1) during transportation.

## Patentansprüche

1. Raupe (1) zum Bewegen entlang einer zylindrischen Struktur (5) und in einer kreisförmigen Bewegung um die Struktur (5), wobei die Struktur (5) eine Längsrichtung (4) aufweist, wobei die Raupe (1) eine erste Klemmeinheit (2A) und eine zweite Klemmeinheit (2B) umfasst, die zum wahlweisen Klemmen um die Struktur konfiguriert sind, um die jeweilige Klemmeinheit (2A, 2B) an der Struktur fixiert zu halten, wobei jede der Klemmeinheiten (2A, 2B) ein im Wesentliches U-förmiges starres Segment (8) umfasst, das einen Spalt (23) zum Aufnehmen der Struktur (5) innerhalb des Spalts (23) bildet; wobei jede der Klemmeinheiten (2A, 2B) auch schwenkbare Greifer (9) an gegenüberliegenden Enden (10) des starren Segments (8) und Querbetätiger (12) umfasst, die mit den Greifern (9) verbunden und zum Schwenken der Greifer (9) in eine Klemmausrichtung angeordnet sind, durch die die Struktur (5) innerhalb des Spalts (23) durch die Greifer (9) geklemmt wird, wobei die zwei Klemmeinheiten (2A, 2B) durch eine Vielzahl von Längsbetätigern (3) miteinander verbunden sind, die angeordnet sind, um synchron parallel zu wirken, um den Abstand zwischen den zwei Klemmeinheiten (2A, 2B) zu variieren; wobei die Raupe (1) zur Bewegung entlang der Struktur (5) gemäß einem Inchworm-Prinzip konfiguriert ist, bei dem die Klemmeinheiten (2A, 2B) die Struktur abwechselnd klemmen und freigeben, wenn die Betätiger (3) zuerst die erste Klemmeinheit (2A) relativ zur zweiten Klemmeinheit (2B) vorschieben, während nur die zweite Klemmeinheit (2B) die Struktur (5) klemmt, und dann die zweite Klemmeinheit (2B) in Richtung der ersten Klemmeinheit (2A) ziehen, während nur die erste Klemmeinheit (2A) die Struktur (5) klemmt, **dadurch gekennzeichnet, dass** jede der Klemmeinheiten (2A, 2B) eine stationäre Rolle (6') innerhalb des Spalts (23) umfasst und die Greifer (9) Rollen (6) zum Halten der Struktur (5) innerhalb des Spalts (23) zwischen der stationären Rolle (6') und den Rollen (6) an den Greifern (9) umfassen, wobei die Rollen (6, 6') zum Rollen der Raupe (1) in einer kreisförmigen Bewegung um die Struktur (5) senkrecht zur Längsrichtung (4) ausgerichtet sind, wenn die Struktur (5) innerhalb des Spalts (23) geklemmt ist.

2. Raupe (1) nach Anspruch 1, wobei die Kombination aus den starren Segmenten (8) und Schwenkgreifern (9) so angeordnet ist, dass sie das Rohr (5) nur teilweise umschließt und den Spalt (23) der Klemmeinheit (2A, 2B) auch im Klemmbetrieb nicht schließt, um Raum durch eine Öffnung in dem Spalt (23) zum Passieren von Objekten bereitzustellen, die sich von der teilweise umschlossenen Struktur (5) erstrecken und die andernfalls ein Kriechen der Raupe (1) an den Objekten vorbei verhindern würden, während die Raupe (1) entlang der Struktur (5) kriecht.

3. Raupe (1) nach einem der vorhergehenden Ansprüche, wobei jede der Klemmeinheiten (2A, 2B) zwei der starren Segmente (8) umfasst, die parallel zueinander und mit einem Raum (25) dazwischen angeordnet sind, und wobei die Querbetätiger (12) in diesem Raum (25) zwischen den zwei starren Segmenten (8) aufgenommen sind; wobei jeder Querbetätiger (12) mit einem Arm (13') verbunden ist, der an den entsprechenden Greifer (9) zum Schwenken des Greifers (9) um eine Achse (10) während der Betätigung durch den Querbetätiger (12) entlang einer Betätigungsrichtung drehbar gekoppelt ist, um die Rollen (6) in Abhängigkeit von der Betätigungsrichtung des Querbetätigers (3) in oder außer Kontakt mit der Struktur (5) zu bringen.

4. Raupe (1) nach einem der Ansprüche 1-3 in Kombination mit einem Werkzeug, das an einem der starren Segmente (8) montiert ist, wobei das Werkzeug eine Kamera (19) zur Inspektion einer Oberfläche der Struktur (5) ist.

5. Raupe (1) nach einem der Ansprüche 1-3 in Kombination mit einer Säge (24), die an einem der starren Segmente (8) montiert ist, wobei die Säge (24) einen sich über Drahtrollen (27) bewegenden endlosen Sägedraht (26) umfasst, wobei die Drahtrollen (27) in einem Abstand voneinander bereitgestellt sind, um durch die Struktur (5) zu sägen, wenn sie in dem Spalt (23) aufgenommen ist.

6. Raupe (1) nach Anspruch 5, wobei die Säge (24) schwenkbar an einem der starren Segmente (8) um eine Schwenkachse (26) montiert ist und die Raupe (1) einen Betätiger umfasst, der zum Schwenken der Säge (24) ausgelegt ist.

7. Raupe (1) nach einem der Ansprüche 1-4 in Kombination mit einem Werkzeug, das an einem der starren Segmente (8) montiert ist, wobei das Werkzeug eine Ultraschallmessraupe (30) ist.

8. Raupe (1) nach Anspruch 7, wobei das Werkzeug ferner eine Ausstoßdüse (32) umfasst, die zum Reinigen einer Oberfläche der Struktur (5) stromaufwärts der Ultraschallmessvorrichtung (30) ausgelegt ist.

9. Raupe (1) nach einem der Ansprüche 1-3 in Kombination mit einem Werkzeug, das an einem der starren Segmente (8) montiert ist, wobei das Werkzeug eine Wirbelstromprüfsonde (40) zum Bestimmen einer Metallermüdung der Struktur umfasst.

10. Raupe (1) nach Anspruch 9, wobei die Wirbelstromprüfsonde (40) an einem Roboterarm (42) angebracht ist.

11. Raupe (1) nach Anspruch 10, wobei die Wirbelstromprüfsonde (40) schwenkbar mit dem Roboterarm (42) verbunden ist.

12. Raupe (1) nach einem der Ansprüche 1-3 in Kombination mit einem Werkzeug, das an einem der starren Segmente (8) montiert ist, wobei das Werkzeug ein Reinigungswerkzeug (50) umfasst.

13. Raupe (1) nach Anspruch 12, wobei das Reinigungswerkzeug (50) eine oder mehrere Düsen (52) umfasst, wobei die eine oder die mehreren Düsen (52) dazu ausgelegt sind, eine tangentiale Sprührichtung relativ zu der Struktur (5) aufzuweisen.

14. Raupe (1) nach einem der Ansprüche 1-3 in Kombination mit einem Werkzeug, das an einem der starren Segmente (8) montiert ist, wobei das Werkzeug einen abrasiven Wasserstrahlschneider umfasst, der zum Schneiden der Struktur (5) ausgelegt ist.

15. Raupe (1) nach einem der Ansprüche 1-3 in Kombination mit einem Werkzeug, das an einem der starren Segmente (8) montiert ist, wobei das Werkzeug eine Strahldüse (60) umfasst, wobei die Strahldüse (60) eine Sandstrahldüse oder Granulatstrahldüse oder Trockeneisstrahldüse ist.

16. Raupe (1) nach einem der Ansprüche 1-3 in Kombination mit einem Werkzeug, das an einem der starren Segmente (8) montiert ist, wobei das Werkzeug eine Farbdüse (65) umfasst.

17. Raupe (1) nach den Ansprüchen 15 und 16, wobei das Werkzeug die Farbdüse (65) und die Strahldüse (60) umfasst.

18. Raupe (1) nach einem der Ansprüche 1-3 in Kombination mit einem Werkzeug, das an einem der starren Segmente (8) montiert ist, wobei das Werkzeug eine Sonde umfasst, die zum Detektieren, ob eine Struktur (5) überflutet ist, ausgelegt ist.

19. Raupe (1) nach einem der vorhergehenden Ansprüche, wobei die Raupe mindestens eine Ausstoßdüse (32) umfasst, die in einer gemeinsamen Ebene mit mindestens einer Rolle (6) positioniert ist, wobei die gemeinsame Ebene senkrecht zur Längsrichtung ist.

20. Verfahren zum Bearbeiten einer zylindrischen Struktur (5), beispielsweise eines Teils einer Ummantelung für eine Offshore-Anlage, wobei das Verfahren Folgendes umfasst:
- Bereitstellen einer Raupe (1) nach einem der Ansprüche 1-3 mit einem Werkzeug zum Bearbeiten der Struktur (5),
- Bereitstellen einer mit der Raupe (1) verbundenen Versorgungsleitung (17) mit Signalübertragungskabeln und Stromversorgung für die Betätiger (3) und Querbetätiger (12) sowie für das Werkzeug;
- Anheben der Raupe (1) auf die Struktur (5), beispielsweise die Ummantelung in der Spritzzone;
- durch die Kabel und Stromversorgung in der Versorgungsleitung (17), Fernsteuern der Raupe (1) entlang der Struktur (5), indem ein Kriechen der Raupe (1) gemäß einem Inchworm-Prinzip bewirkt wird;
- Steuern der korrekten Arbeitsposition der Raupe (1) auf der Struktur (5);
- Bearbeiten der Struktur (5) mit dem Werkzeug, während die Raupe (1) an die Struktur (5) geklemmt ist,
- Bewegen der Raupe (1) um die Struktur (5), um verschiedene Bereiche an der Struktur zu bearbeiten, beispielsweise sowohl über als auch unter der Wasseroberfläche in der Spritzzone.

21. Behälter (100), umfassend eine Raupe (1) nach einem der Ansprüche 1-19, wobei der Behälter (100) ein oder mehrere Werkzeuge umfasst, die es ermöglichen, die Raupe (1) in eine Raupe (1) nach einem oder mehreren der Ansprüche 4-17 zu modifizieren.

22. Behälter (100) nach Anspruch 21, wobei der Behälter (100) die Raupe (1) unter Verwendung von Drähten (110) aufhängt, um eine Beschädigung der Raupe (1) während des Transports zu verhindern.

## Revendications

1. Chenille (1) pour se déplacer le long d'une structure cylindrique (5) et dans un mouvement circulaire autour de la structure (5), dans laquelle la structure (5) a une direction longitudinale (4), dans laquelle la chenille (1) comprend une première unité de serrage (2A) et une seconde unité de serrage (2B), qui sont configurées pour un serrage sélectif autour de la structure afin de maintenir l'unité de serrage respective (2A, 2B) fixée à la structure, chacune des unités de serrage (2A, 2B) comprenant un segment rigide sensiblement en forme de U (8) formant un espace (23) pour prendre la structure (5) à l'intérieur de l'espace (23) ; dans laquelle chacune des unités de serrage (2A, 2B) comprend également des pinces pivotantes (9) aux extrémités opposées (10) du segment rigide (8) et des actionneurs transversaux (12) reliés aux pinces (9) et agencés pour faire pivoter les pinces (9) dans une orientation de serrage par laquelle la structure (5) est serrée à l'intérieur de l'espace (23) par les pinces (9), dans laquelle les deux unités de serrage (2A, 2B) sont reliées l'une à l'autre par une pluralité d'actionneurs longitudinaux (3) agencés pour agir de manière synchrone en parallèle pour faire varier la distance entre les deux unités de serrage (2A, 2B) ; dans laquelle la chenille (1) est configurée pour se déplacer le long de la structure (5) selon un principe d'inchworm dans lequel les unités de serrage (2A, 2B) serrent et relâchent alternativement la structure, lorsque les actionneurs (3) font d'abord avancer la première unité de serrage (2A) par rapport à la seconde unité de serrage (2B) tandis que seule la seconde unité de serrage (2B) serre la structure (5) puis fait glisser la seconde unité de serrage (2B) vers la première unité de serrage (2A) tandis que seule la première unité de serrage (2A) serre la structure (5), **caractérisée en ce que** chacune des unités de serrage (2A, 2B) comprend un rouleau fixe (6') à l'intérieur de l'espace (23) et les pinces (9) comprennent des rouleaux (6) pour maintenir la structure (5) à l'intérieur de l'espace (23) entre le rouleau fixe (6') et les rouleaux (6) sur les pinces (9), les rouleaux (6, 6') étant orientés pour faire rouler la chenille (1) dans un mouvement circulaire autour de la structure (5) perpendiculairement à la direction longitudinale (4), lorsque la structure (5) est serrée à l'intérieur de l'espace (23).

2. Chenille (1) selon la revendication 1, dans laquelle la combinaison des segments rigides (8) et des pinces pivotantes (9) est agencée pour n'enfermer que partiellement le tuyau (5) et ne pas fermer l'espace (23) de l'unité de serrage (2A, 2B) même en opération de serrage pour fournir un espace par une ouverture dans l'espace (23) pour le passage d'objets qui s'étendent depuis la structure partiellement fermée (5) et qui autrement empêcheraient le rampage de la chenille (1) au-delà des objets pendant que la chenille (1) rampe le long de la structure (5).

3. Chenille (1) selon une quelconque revendication précédente, dans laquelle chacune des unités de serrage (2A, 2B) comprend deux desdits segments rigides (8) disposés parallèlement l'un à l'autre et avec un espace (25) entre eux, et dans laquelle les actionneurs transversaux (12) sont logés dans cet espace (25) entre les deux segments rigides (8) ; dans laquelle chaque actionneur transversal (12) est relié à un bras (13') qui est couplé en rotation à la pince correspondante (9) pour pivoter la pince (9) autour d'un essieu (10) lors de l'actionnement par l'actionneur transversal (12) selon une direction d'actionnement pour amener les rouleaux (6) en contact ou hors de contact avec la structure (5) en fonction de la direction d'actionnement de l'actionneur transversal (3).

4. Chenille (1) selon l'une quelconque des revendications 1 à 3 en combinaison avec un outil monté sur l'un des segments rigides (8), dans laquelle l'outil est une caméra (19) pour l'inspection d'une surface de la structure (5).

5. Chenille (1) selon l'une quelconque des revendications 1 à 3 en combinaison avec une scie (24) montée sur l'un des segments rigides (8), la scie (24) comprenant un fil de sciage sans fin (26) se déplaçant sur des rouleaux de fil (27), les rouleaux de fil (27) étant prévus à distance les uns des autres pour scier à travers la structure (5) lorsqu'ils sont logés dans l'espace (23) .

6. Chenille (1) selon la revendication 5, dans laquelle la scie (24) est montée pivotante sur l'un des segments rigides (8) autour d'un axe de pivotement (26) et la chenille (1) comprenant un actionneur adapté pour faire pivoter la scie (24).

7. Chenille (1) selon l'une quelconque des revendications 1 à 4 en combinaison avec un outil monté sur l'un des segments rigides (8), dans laquelle l'outil est une chenille de mesure à ultrasons (30).

8. Chenille (1) selon la revendication 7, dans laquelle l'outil comprend en outre une buse à jet (32) adaptée pour nettoyer une surface de la structure (5) en amont du dispositif de mesure à ultrasons (30).

9. Chenille (1) selon l'une quelconque des revendications 1 à 3 en combinaison avec un outil monté sur l'un des segments rigides (8), dans laquelle l'outil comprend une sonde d'inspection à courants de Foucault (40) pour déterminer la fatigue du métal de la structure.

10. Chenille (1) selon la revendication 9, dans laquelle la sonde d'inspection à courants de Foucault (40) est fixée à un bras de robot (42).

11. Chenille (1) selon la revendication 10, dans laquelle la sonde d'inspection à courants de Foucault (40) est reliée de manière pivotante au bras de robot (42).

12. Chenille (1) selon l'une quelconque des revendications 1 à 3 en combinaison avec un outil monté sur l'un des segments rigides (8), dans laquelle l'outil comprend un outil de nettoyage (50).

13. Chenille (1) selon la revendication 12, dans laquelle l'outil de nettoyage (50) comprend une ou plusieurs buses (52), les une ou plusieurs buses (52) étant adaptées pour avoir une direction de pulvérisation tangentielle par rapport à la structure (5).

14. Chenille (1) selon l'une quelconque des revendications 1 à 3 en combinaison avec un outil monté sur l'un des segments rigides (8), dans laquelle l'outil comprend une découpeuse à jet d'eau abrasif adaptée pour couper la structure (5).

15. Chenille (1) selon l'une quelconque des revendications 1 à 3 en combinaison avec un outil monté sur l'un des segments rigides (8), dans laquelle l'outil comprend une buse de soufflage (60), la buse de soufflage (60) étant une buse de grenaillage à sable ou une buse de grenaillage à gravier ou une buse de grenaillage à la neige carbonique.

16. Chenille (1) selon l'une quelconque des revendications 1 à 3 en combinaison avec un outil monté sur l'un des segments rigides (8), dans laquelle l'outil comprend une buse à peinture (65) .

17. Chenille (1) selon les revendications 15 et 16, dans laquelle l'outil comprend la buse à peinture (65) et la buse de soufflage (60).

18. Chenille (1) selon l'une quelconque des revendications 1 à 3 en combinaison avec un outil monté sur l'un des segments rigides (8), dans laquelle l'outil comprend une sonde adaptée pour détecter si une structure (5) est inondée.

19. Chenille (1) selon l'une quelconque des revendications précédentes, dans laquelle la chenille comprend au moins une buse à jet (32) positionnée dans un plan commun avec au moins un rouleau (6), dans laquelle le plan commun est perpendiculaire à la direction longitudinale.

20. Procédé de travail d'une structure cylindrique (5), par exemple une partie d'une chemise pour une installation offshore, le procédé comprenant :
- la fourniture d'un outil à une chenille (1) selon l'une quelconque des revendications 1 à 3 pour travailler la structure (5),
- la fourniture d'un ombilical (17) connecté à la chenille (1) avec des câbles de transfert de signal et une alimentation électrique pour les actionneurs (3) et les actionneurs transversaux (12) ainsi que pour l'outil ;
- le levage de la chenille (1) sur la structure (5), par exemple la chemise dans la zone d'éclaboussure ;
- par les câbles et la fourniture d'énergie dans l'ombilical (17) guidant à distance la chenille (1) le long de la structure (5) en faisant ramper la chenille (1) selon un principe d'inchworm ;
- la commande de la bonne position de travail de la chenille (1) sur la structure (5) ;
- le travail de la structure (5) par l'outil tandis que la chenille (1) est serrée à la structure (5),
- le déplacement de la chenille (1) autour de la structure (5) pour travailler différentes régions sur la structure, par exemple à la fois au-dessus et au-dessous de la surface de l'eau dans la zone d'éclaboussement.

21. Conteneur (100) comprenant une chenille (1) selon l'une quelconque des revendications 1 à 19, dans lequel le conteneur (100) comprend un ou plusieurs outils permettant de modifier la chenille (1) en une chenille (1) selon l'une quelconque une ou plusieurs des revendications 4 à 17.

22. Conteneur (100) selon la revendication 21, dans lequel le conteneur (100) suspend la chenille (1) à l'aide de fils (110) pour empêcher l'endommagement de la chenille (1) pendant le transport.
